# EUROPÄISCHE PATENTSCHRIFT

(11) **EP 1 459 148 B1**
(45) Veröffentlichungstag und Bekanntmachung des Hinweises auf die Patenterteilung: **26.02.2014**
(21) Anmeldenummer: 02798284.2
(22) Anmeldetag: 19.12.2002
(51) Int. Cl.: G05D 16/20

(54) **ELEKTROMAGNETVENTIL, INSBESONDERE FUER AUTOMATIKGETRIEBE**
ELECTROMAGNETIC VALVE, IN PARTICULAR FOR AUTOMATIC GEARBOXES
VANNE ELECTROMAGNETIQUE DESTINEE NOTAMMENT A DES TRANSMISSIONS AUTOMATIQUES

(30) Priorität: 21.12.2001 DE 10163235
(43) Veröffentlichungstag der Anmeldung: 22.09.2004
(73) Patentinhaber: ROBERT BOSCH GMBH, 70442 Stuttgart (DE)
(72) Erfinder: FLEISCHER, Walter, 70469 Stuttgart (DE); RUDOLPH, Wolfgang, 71638 Ludwigsburg (DE); OTT, Christof, 71679 Asperg (DE); SEMLER, Juergen, 73553 Alfdorf (DE); KROHN, Martin, 71384 Weinstadt (DE); HUBER, Bernd, 73614 Schorndorf (DE); DORFSCHMID, Jens, 72636 Frickenhausen (DE)
(86) Internationale Anmeldenummer: PCT/DE2002/004667
(87) Internationale Veröffentlichungsnummer: WO 2003/056404

(56) Entgegenhaltungen:
- WO-A-01/33307
- DE-A- 3 417 383
- DE-A- 19 904 902
- US-A- 5 234 030
- US-B1- 6 209 563

## Beschreibung

### Stand der Technik

Die Erfindung geht aus von einem Elektromagnetventil, insbesondere für Automatikgetriebe, nach der Gattung des Anspruchs 1, wie es zum Beispiel aus der DE 197 33 660 A1 bekannt ist.

In der hydraulischen Steuerung von Automatikgetrieben besteht die Problematik, dass hydraulische Schwingungen auftreten können, was sich nachteilig auf den Schaltkomfort und die Haltbarkeit auswirkt. Diese Schwingungen können unter anderem durch Drosselstellen in Form von Blenden zwischen den hydraulischen Aktuatoren vermindert oder gar verhindert werden. Insbesondere sind Blenden zwischen Druckreglern und Nachfolgeschiebern geeignete Mittel hinsichtlich der Schwingungen. Dabei werden die Blenden überlicherweise irgendwo in den Leitungen zwischen dem Druckregler und dem Verbraucher oder in einem sogenannten Zwischenblech konstruktiv untergebracht. Dabei werden die Blenden üblicherweise an einer in konstruktiven Gegebenheiten begründeten Position zwischen dem Druckregler und einem Nachfolgeschieber an einem Durchtritt durch ein Zwischenblech realisiert.

Aus der US 5 234 030 ist ein Elektromagnetventil bekannt, das einen Magnetteil und ein Ventilteil mit einem Anschlussstutzen aufweist, an dem wengistens ein Zulauf und ein Verbraucheranschluss ausgebildet sind. Verbraucherseitig ist eine Drosselstelle in das Elekromagnetventil integriert.

### Vorteile der Erfindung

Demgegenüber weist das erfindungsgemäße Elektromagnetventil, insbesondere für ein Automatikgetriebe, mit den Merkmalen des Anspruchs 1 den Vorteil auf, dass eine Drosselstelle auf einfache Weise angeordnet ist, indem sie im verbraucherseitigen bzw. arbeitsdruckseitigen Anschluß eines Filterkäfigs des Elektromagnetventils integriert ist. An dieser Stelle ist die Drosselstelle fertigungstechnisch besonders einfach zu realisieren. Zugleich ist Lage der Drosselstelle relativ zum Elektromagnetventil durch die Integration in den Filterkäfig des Elektromagnetventils eindeutig festgelegt, sodass sie an der Position ihrer größten Wirksamkeit angeordnet ist, was einen reduziertem Applikationsaufwand beim Hersteller der hydraulischen Steuerung zur Folge hat.

Der Druckraum, in dem im Elektromagnetventil der Arbeitsdruck erzeugt wird, wird vom Filterkäfig gegenüber einer Aufnahmebohrung für das Elektromagnetventil abgeschlossen. Ein Ölaustausch kann nur über die integrierte Blende erfolgen. Der Verlustbeiwert der Drosselstelle kann über Durchmesser und Länge sehr einfach an die Erfordernisse angepasst werden.

Die Integration der Drosselstelle in den Filterkäfig bewirkt eine Kostenreduktion des Gesamtsystems, da die Drosselstelle im Filterkäfig kostengünstiger zu realisieren ist als in einem Zwischenblech.

Da die Wirksamkeit der Drosselstelle im Filterkäfig von der relativen Lage bzw. Entfernung zum Elektromagnetventil abhängt, kann bei der erfindungsgemäßen Anordnung Drosselstelle ihr Durchmesser größer gewählt werden als in einem Zwischenblech. Das bedeutet einen entscheidende Funktionsvorteil bei tiefen Temperaturen, da so die Sprungantwortzeiten kürzer ausfallen.

Alternativ kann die Drosselstelle auch direkt im Anschlußstutzen bzw. Flansch des Elektromagnetventils integriert werden.

Ein weiterer Vorteil des erfindungsgemäßen Elektromagnetventils ist, dass es zusammen mit der die Ventilhydraulik stark beeinflussenden Drosselstelle im Entwicklungs- und Fertigungsprozess geprüft werden kann, was zu einer spürbaren Qualitätsverbesserung führt.

Eine spezielle Ausformung der Drosselstelle (z.B. stufenförmig, konisch etc.) zur Optimierung des dynamischen Verhaltens kann in der Kunststoff-Spritzgußtechnik des Filterkäfigs leichter ausgeführt werden als in einem Zwischenblech durch ein Stanz- oder Bohrwerkzeug.

Es sind Anwendungsfälle möglich, bei denen die Ausrichtung der Drosselstelle in Umfangsrichtung für eine Optimierung der Wirkweise der Drosselstelle entscheidend ist. Für solche Fälle kann der Filterkäfig und der Ventilteil mit einer Verdrehsicherung versehen werden.

Weitere Vorteile oder vorteilhafte Weiterbildungen der Erfindung ergeben sich aus den Unteransprüchen und der Beschreibung.

### Zeichnung

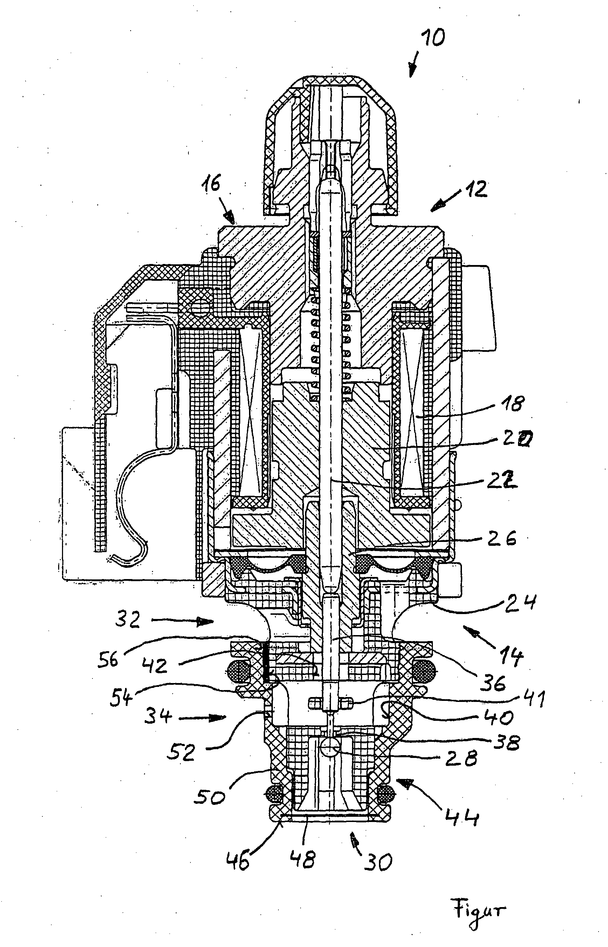

Ein Ausführungsbeispiel der Erfindung ist in der Zeichnung dargestellt und in der nachfolgenden Beschreibung näher erläutert. Die einzige Figur zeigt ein Elektromagnetventil im Längsschnitt.

### Beschreibung der Ausführungsbeispiele

In der einzigen Figur ist ein Elektromagnetventil 10, insbesondere für die Verwendung in Automatikgetrieben von Kraftfahrzeugen, dargestellt. Im vorliegenden Ausführungsbeispiel wird das Elektromagnetventil 10 als Druckregelventil zur Steuerung von Aktuatoren in Automatikgetrieben verwendet. Alternativ kann es sich auch um ein elektromagnetisch vorgesteuertes Ventil handeln.

Das Elektromagnetventil 10 weist einen Magnetteil 12 und fluchtend dazu angeordnet einen Ventilteil 14 auf. Der Magnetteil 12 umfasst im wesentlichen ein Gehäuse 16, eine Spule 18 und einen verschiebbaren Anker 20, in dem eine Ankerstange 22 angeordnet ist.

Der Ventilteil 14 ist über einen Anschlussstutzen 24 mit dem Magnetteil 12 verbunden. Außer dem Anschlussstutzen 24 umfasst der Ventilteil 14 ein Betätigungsglied 26 und ein kugelförmiges Schließglied 28. Am Anschlussstutzen 24 ist ein Zulauf 30, ein Rücklauf 32 und ein Verbraucheranschluss 34 ausgebildet. Das Betätigungsglied 26 wird vom Anker 20 verschoben. Im Zulauf 30 ist das Schließglied 28 angeordnet und wird von einem im Betätigungsglied 26 angeordneten Stößel 36 betätigt. Der Stößel 36 greift durch eine Bohrung 38, die zwischen dem Zulauf 30 und einem Druckraum 40 des Verbraucheranschlusses 34, in dem im Elektromagnetventil 10 der Arbeitsdruck erzeugt wird, ausgebildet ist, und wirkt auf das Schließglied 28. Im Druckraum 40 durchdringt der Stößel 36 eine Prallplatte 41. Der Stößel 36 reicht weiterhin durch den Druckraum 40 und eine zwischen dem Druckraum 40 sowie dem Rücklauf 32 ausgebildete Bohrung 42 und ist schließlich im Betätigungsglied 26 befestigt. Mit dem Betätigungsglied 26 lässt sich die Bohrung 42 schließen und öffnen.

Auf dem Ventilteil 14 ist ein Filterkäfig 44 angeordnet. Der Filterkäfig 44 hat im wesentlichen eine Topfform, wobei am Boden 46 das Filtergewebe 48 angeordnet ist und die ringförmige Wand 50 den Druckraum 40 bis auf eine in der Wand 50 ausgebildete Drosselstelle 52, zum Beispiel in Form einer Blende, verschließt. Die Drosselstelle 52 ist in den Filterkäfig 44 und somit in das Elektromagnetventil 10 integriert. Das bietet Vorteile hinsichtlich der Genauigkeit bei der dämpfenden Wirkung und der Herstellung. Da die Drosselstelle 52 in das Elektromagnetventil 10 integriert ist und nicht in einem konstruktionsbedingt über die verschiedenen Einbaupositionen variierenden Abstand zum Elektromagnetventil 10 angeordnet ist, ist die dämpfende Wirkung besser beherrschbar. Da der Filterkäfig 44 ein Kunststoff-Spritzgussteil ist, kann die Drosselstelle 52 leicht bei der Herstellung vorgesehen werden.

Alternativ ist es auch möglich, die Drosselstelle 52 im Druckraum des Ventilteils 14 zu integrieren. Dies kann, wie im vorliegenden Ausführungsbeispiel, bei einem als Kunststoff-Spritzgussteil ausgebildeten Elektromagnetventil 10 mit einem entsprechend ausgebildeten Schieber bei der Herstellung integriert werden. Weiterhin ist es möglich, dass die Drosselstelle 52 nicht am Filterkäfig 44 selbst ausgebildet ist. Sollte zum Beispiel kein Filterkäfig 44 erforderlich sein, so kann die Drosselstelle 52 in einer Hülse, die um den Druckraum 40 angeordnet ist, mit dem Elektromagnetventil 10 integriert werden.

Der Filterkäfig 44 bzw. alternativ eine Hülse sind am Ventilteil 14 verdrehsicher befestigt. Hierzu ist am Filterkäfig 44 bzw. alternativ an der.Hülse ein Fortsatz 54 und am Ventilteil 14 eine korrespondierende Ausnehmung 56 ausgebildet. Es kann jedoch auch am Ventilteil 14 ein Fortsatz und am Filterkäfig 44 bzw. alternativ an der Hülse eine Ausnehmung vorgesehen werden. Der Fortsatz 54 kann beispielsweise als Nase oder Steg und die Ausnehmung als Senkung oder Nut ausgebildet sein. Es sind jedoch auch andere Möglichkeiten einer Verdrehsicherung denkbar.

Die Drosselstelle 52 weist einen Durchmesser von ca. imm auf, die Länge ist etwas geringer. Das optimale Verhältnis von Länge zu Durchmesser kann jedoch zum Beispiel durch Versuche für den jeweiligen Anwendungsfall optimiert werden. Auch muss die Drosselstelle 52 nicht unbedingt einen runden Querschnitt haben. Ebenso sind konische und gestufte Durchmesserverläufe denkbar. Wichtig ist, dass die Drosselstelle 52 verbraucherseitig in das Elektromagnetventil 10 integriert ist.

## Patentansprüche

1. Elektromagnetventil (10), insbesondere für Automatikgetriebe, umfassend ein Magnetteil (12) und ein Ventilteil (14) mit einem Anschlussstutzen (24), an dem wenigstens ein Zulauf (30) und ein Verbraucheranschluss (34) ausgebildet sind, wobei verbraucherseitig eine Drosselstelle (52) in das Elektromagnetventil integriert ist, **dadurch gekennzeichnet, dass** das Elektromagnetventil einen an dem Ventilteil (14) angeordneten Filterkäfig aufweist und das die Drosselstelle (52) an dem Filterkäfig (44) des Elektromagnetventils (10) ausgebildet ist.

2. Elektromagnetventil (19) nach Anspruch 1, **dadurch gekennzeichnet, dass** die Drosselstelle in einer einen Druckraum (40) des Elektromagnetventils (10) umgebenden Wand (50) des Filterkäfigs (44) ausgebildet ist.

3. Elektromagnetventil (10) nach Anspruch 1 oder 2, **dadurch gekennzeichnet, dass** am Ventilteil (14) und am Filterkäfig (44) eine Verdrehsicherung ausgebildet ist.

4. Elektromagnetventil (10) nach Anspruch 3, **dadurch gekennzeichnet, dass** zur Verdrehsicherung am Ventilteil (14) ein Fortsatz (54) und an einem Filterkäfig (44) eine korrespondierende Ausnehmung (56) oder umgekehrt ausgebildet ist.

## Claims

1. Solenoid valve (10), in particular for automatic transmissions, comprising a magnet part (12) and a valve part (14) with a connector stub (24), on which at least one inlet (30) and one consumer connector (34) are formed, a throttle point (52) being integrated into the solenoid valve on the consumer side, **characterized in that** the solenoid valve has a filter cage which is arranged on the valve part (14), and **in that** the throttle point (52) is formed on the filter cage (44) of the solenoid valve (10).

2. Solenoid valve (10) according to Claim 1, **characterized in that** the throttle point is formed in a wall (50) of the filter cage (44), which wall (50) surrounds a pressure space (40) of the solenoid valve (10).

3. Solenoid valve (10) according to Claim 1 or 2, **characterized in that** an anti-rotation safeguard is formed on the valve part (14) and on the filter cage (44).

4. Solenoid valve (10) according to Claim 3, **characterized in that**, for the anti-rotation safeguard, a projection (54) is formed on the valve part (14) and a corresponding recess (56) is formed on a filter cage (44) or vice versa.

## Revendications

1. Électrovanne (10) en particulier pour des transmissions automatiques, comprenant une partie magnétique (12) et une partie de soupape (14) avec un raccord (24) au niveau duquel sont réalisés au moins une alimentation (30) et un raccord à un consommateur (34), un point d'étranglement (52) étant intégré dans l'électrovanne du côté consommateur, **caractérisée en ce que** l'électrovanne présente une cage de filtre disposée sur la partie de soupape (14) et **en ce que** le point d'étranglement (52) est réalisé au niveau de la cage de filtre (44) de l'électrovanne (10).

2. Électrovanne (10) selon la revendication 1, **caractérisée en ce que** le point d'étranglement est réalisé dans une paroi (50) de la cage de filtre (44) entourant un espace de pression (40) de l'électrovanne (10).

3. Électrovanne (10) selon la revendication 1 ou 2, **caractérisée en ce qu'**une fixation contre la rotation est réalisée sur la partie de soupape (14) et sur la cage de filtre (44).

4. Électrovanne (10) selon la revendication 3, **caractérisée en ce qu'**une saillie (54) est réalisée sur la partie de soupape (14) en vue d'une fixation contre la rotation et un évidement correspondant (56) est réalisé au niveau d'une cage de filtre (44) ou inversement.
